# EUROPÄISCHE PATENTSCHRIFT

(11) **EP 0 913 558 B1**
(45) Veröffentlichungstag und Bekanntmachung des Hinweises auf die Patenterteilung: **23.05.2001**
(21) Anmeldenummer: 98117498.0
(22) Anmeldetag: 15.09.1998
(51) Int. Cl.: F01N 3/08, F01N 3/20, B01D 53/94

(54) **Abgasreinigungsanlage für eine Brennkraftmaschine**
Exhaust gas purification apparatus for an internal-combustion engine
Dispositif d'épuration des gaz d'échappement d'un moteur à combustion interne

(30) Priorität: 29.10.1997 DE 19747670
(43) Veröffentlichungstag der Anmeldung: 06.05.1999
(73) Patentinhaber: DaimlerChrysler AG, 70567 Stuttgart (DE)
(72) Erfinder: Boegner, Walter, 71686 Remseck (DE); Haak, Karl-Ernst, Dr., 73669 Lichtenwald (DE); Voigtländer, Dirk, 70825 Korntal-Münchingen (DE); Wenninger, Günter, 70599 Stuttgart (DE); Wirbeleit, Friedrich, Dr., 73733 Esslingen (DE); Krutzsch, Bernd, Dr., 73770 Denkendorf (DE)

(56) Entgegenhaltungen:
- DE-A- 19 626 837
- DE-C- 4 319 294
- DE-C- 19 628 796
- US-A- 5 406 790
- PATENT ABSTRACTS OF JAPAN vol. 015, no. 345 (C-0864), 3. September 1991 (1991-09-03) & JP 03 135417 A (MATSUSHITA ELECTRIC IND CO LTD), 10. Juni 1991 (1991-06-10)
- PATENT ABSTRACTS OF JAPAN vol. 011, no. 307 (C-450), 7. Oktober 1987 (1987-10-07) & JP 62 097630 A (NIPPON SHOKUBAI KAGAKU KOGYO CO LTD), 7. Mai 1987 (1987-05-07)

## Beschreibung

Die Erfindung bezieht sich auf eine Abgasreinigungsanlage für eine Brennkraftmaschine nach dem Oberbegriff des Anspruchs 1. Die bei derartigen Anlagen vorgesehenen Stickoxidadsorber dienen bekanntermaßen dazu, im Abgas enthaltene Stickoxide im Adsorptionsbetrieb zu adsorbieren und damit dem Abgas zu entziehen, das dann weitgehend stickoxidfrei nach außen abgegeben werden kann. Von Zeit zu Zeit, d.h. spätestens bei Erreichen seiner Stickoxidspeicherkapazität, wird der jeweilige Stickoxidadsorber im Desorptionsbetrieb gefahren, in welchem die in ihm adsorbierten Stickoxide wieder desorbiert werden. Der die desorbierten Stickoxide aufnehmende Abgasstrom wird dann geeignet behandelt, beispielsweise in eine Ansaugleitung der Brennkraftmaschine rückgeführt, um die desorbierten Stickoxide durch die Verbrennung in der Brennkraftmaschine zu Stickstoff und Sauerstoff zu reagieren.

Eine Abgasreinigungsanlage dieser Art ist in der Patentschrift DE 43 19 294 C1 beschrieben. Dort werden zwei parallele Stickoxidadsorber alternierend im Adsorptions- und Desorptionsbetrieb gefahren, wobei zur Desorption Frischluft über eine Luftleitung in den betreffenden Stickoxidadsorber eingespeist und dieser bzw. die zugeführte Frischluft extern beheizt wird, während gleichzeitig die Abgasstromeinspeisung abgesperrt bleibt. Hingegen unterbleiben die Luftzufuhr und die externe Beheizung des jeweiligen Adsorbers im Adsorptionsbetrieb, in welchem der Adsorber vom Abgasstrom der Brennkraftmaschine durchströmt wird.

In der deutschen Patentanmeldung Nr. 196 28 796.0 ist eine Abgasreinigungsanlage der eingangs genannten Art beschrieben, die zwei parallel angeordnete, alternierend im Adsorptions- und Desorptionsbetrieb gefahrene Adsorber und einen stromaufwärts der Adsorber motornah angeordneten Oxidationskatalysator zur Oxidation von im Abgas enthaltenem NO zu NO₂ aufweist. Ein stromaufwärts der Adsorber gelegener Abgas leitungsabschnitt teilt sich in einen Hauptstromleitungszweig und einen zu diesem parallelen und gegenüber diesem kürzeren und/oder stärker thermisch isolierten Teilstromleitungszweig auf, wobei der jeweils im Adsorptionsmodus betriebene Adsorber vom Abgasstrom des Hauptstromleitungszweiges und der jeweils andere, im Desorptionsmodus betriebene Adsorber vom Abgasstrom des Teilstromleitungszweiges gespeist werden. Diese Maßnahme trägt der Tatsache Rechnung, daß ein niedriges Temperaturniveau den Adsorptionsvorgang und ein höheres Temperaturniveau den Desorptionsvorgang begünstigen und Stickoxidadsorber häufig NO₂ beträchtlich leichter als NO adsorbieren.

Eine weitere gattungsgemäße Abgasreinigungsanlage mit zwei parallel angeordneten Stickoxidadsorbern ist in der Offenlegungsschrift DE 196 26 837 A1 offenbart. Dort bestehen die Desorptionsgasstrom-Bereitstellungsmittel beispielsweise aus zwei direkt dem jeweiligen Stickoxidadsorber vorgeschalteten, elektrisch beheizbaren Katalysatoren, denen im betreffenden Zweig des Abgasstrangs eine jeweilige Kraftstoffeindüseinheit vorgeschaltet ist, oder aus einem den Stickoxidadsorbern gemeinsam zugeordneten, mit einem leicht mageren Dieselkraftstoff/Luft-Gemisch betriebenen Brenner und diesem nachgeschalteter Kraftstoffeindüseinheit, wobei in letzterem Fall das heiße Brennerabgas als Trägergas für den eingedüsten Kraftstoff fungiert, der über einen entsprechenden Leitungszweig dem jeweiligen Stickoxidadsorber zugeführt wird. Eine oder zwei parallel stromabwärts der Stickoxidadsorber angeordnete Lambda-Sonden dienen dazu, das Ende einer jeweiligen Desorptionsphase zu erkennen.

Der Erfindung liegt als technisches Problem die Bereitstellung einer Abgasreinigungsanlage der eingangs genannten Art zugrunde, die eine vorteilhafte Abgasreinigungsfunktionalität für stickoxidhaltige Abgase besitzt.

Dieses Problem wird durch eine Abgasreinigungsanlage mit den Merkmalen des Anspruchs 1 gelöst. Bei dieser Anlage ist eine den Stickoxidadsorbern gemeinsame Desorptionsgasleitung vorgesehen, in der ein extern beheizbarer Katalysator angeordnet ist, dem ein Gemisch aus Luft und/oder Abgas einerseits sowie Kraftstoff in einem mindestens stöchiometrischen Anteil andererseits zuführbar sind und der dieses Gemisch in einen desorbierenden Gasstrom verbrennt, der dem jeweils im Desorptionsbetrieb befindlichen Stickoxidadsorber zugeführt wird. Über eine Lambda-Sonde wird der Lambdawert des desorbierenden Gasstroms auf einen gewünschten Sollwert eingeregelt, wozu die Lambda-Sonde stromabwärts des extern beheizbaren Katalysators und stromaufwärts der Stickoxidadsorber in die Desorptionsgasleitung eingebracht ist.

Mit dieser Maßnahme kann dem jeweils zu desorbierenden Stickoxidadsorber das Abgas eines Verbrennungsvorgangs eines Luft/Kraftstoff-Gemischs mit regelbarem, mindestens stöchiometrischem Kraftstoffanteil, d.h. mit stöchiometrischem oder fettem Luft/Kraftstoff-Verhältnis, zugeführt werden, ohne daß dadurch dem Betrieb der Brennkraftmaschine Beschränkungen auferlegt werden. Die Brennkraftmaschine kann folglich auch während des Desorptionsbetriebs eines Adsorbers bei Bedarf mit einem mageren Luft/Kraftstoff-Gemisch betrieben werden, da der zu desorbierende Adsorber den desorbierenden Gasstrom von der Verbrennung des stöchiometrischen oder fetten Luft/Kraftstoff-Gemischs im extern beheizten Katalysator erhält. Das Abgas eineer solchen Verbrennung enthält bekanntermaßen unverbrannte Kohlenwasserstoffe, Kohlenmonoxid und Wasserstoff, während der in dem dem Katalysator zugeführten Luft/Abgas-Strom enthaltene Sauerstoff nahezu vollständig verbrennt, was den Desorptionsvorgang begünstigt. Die Zuführung von Abgas anstelle von Frischluft für die Verbrennung im extern beheizten Katalysator hat den Vorteil, daß der Sauerstoffgehalt im Abgas bereits stark vermindert ist und daher weniger Kraftstoff zudosiert werden muß, um den gewünschten, mindestens stöchiometrischen Kraftstoffanteil zu erhalten. Außerdem besitzt das Abgas eine höhere Temperatur als zugeführte Frischluft, was den Energiebedarf zum Aufheizen des Katalysators verringert und auf diese Weise die Gesamtenergiebilanz des Systems verbessert. Die Stickoxide, die mit diesem vom Betrieb der Brennkraftmaschine vorteilhafterweise entkoppelten Desorptionsvorgang aus dem jeweiligen Adsorber freigesetzt werden, können dann geeignet behandelt werden, z.B. durch Rückführung in einen Ansaugtrakt der Brennkraftmaschine. Die Abgasreinigungsanlage eignet sich insbesondere auch zur Abgasreinigung bei Brennkraftmaschinen von Kraftfahrzeugen.

Bei einer nach Anspruch 2 weitergebildeten Abgasreinigungsanlage ist der extern beheizbare Katalysator von einem elektrisch beheizbaren Katalysator mit vergleichsweise geringem Volumen gebildet, einem sogenannten elektrisch beheizbaren Mini-Katalysator, auch Mini-E-Katalysator bezeichnet, wie er beispielsweise bei Brennkraftmaschinen von Kraftfahrzeugen für andere Zwecke gebräuchlich ist.

Eine vorteilhafte Ausführungsform der Erfindung ist in der Zeichnung dargestellt und wird nachfolgend beschrieben.

Die einzige Figur zeigt ein schematisches Blockdiagramm wesentlicher Teile einer Abgasreinigungsanlage einer Brennkraftmaschine eines Kraftfahrzeuges.

Die in der Figur dargestellte Abgasreinigungsanlage enthält zur Reinigung des Abgases eines Kraftfahrzeugmotors 4 zwei Stickoxidadsorber 1, 2 und einen Oxidationskatalysator 3. Der Oxidationskataysator 3 befindet sich in einem an die Abgasseite des Motors 4 anschließenden, das Abgas aus den verschiedenen Zylindern sammelnden Abgasleitungsabschnitt 5 und ist möglichst motornah positioniert. Stromabwärts des Oxidationskatalystors 3 verzweigt sich der Abgasleitungsstrang in zwei parallele Teilstränge 6a, 6b, in denen jeweils einer der beiden Stickoxidadsorber 1, 2 angeordnet ist.

An der Eintrittsseite der beiden parallelen Abgasteilstränge 6a, 6b ist je ein Steuerventil 7, 8 vorgesehen, von denen abwechselnd jeweils das eine offen und das andere geschlossen wird, um periodisch alternierend jeweils einen der beiden Adsorber 1, 2 mit dem aus dem Oxidationskatalysator 3 austretenden Abgasstrom zu beaufschlagen. In der Figur ist der Fall veranschaulicht, daß das Ventil 7 offen ist und das aus dem Oxidationskatalysator 3 austretende Abgas zum zugehörigen Adsorber 1 durchläßt, während das andere Ventil 8 geschlossen ist, so daß das Motorabgas nicht in den zugehörigen anderen Adsorber 2 gelangt, was durch die gestrichelte Wiedergabe des stromaufwärts dieses Adsorbers 2 gelegenen Abschnitts dieses Abgasteilstrangs 6b symbolisiert ist. Stromabwärts der beiden parallelen Stickoxidadsorber 1, 2 vereinigen sich die beiden Abgasteilstränge 6a, 6b wieder zu einem gemeinsamen, abführenden Abgasstrang 9, wobei vor der Vereinigungsstelle in jedem Abgasteilstrang 6a, 6b wiederum je ein Steuerventil 10, 11 angeordnet ist, um den aus dem betreffenden Adsorber 1, 2 austretenden Abgasstrom wahlweise in den abführenden Abgasstrang 9 weiterzuleiten oder ihn an dieser Weiterleitung zu hindern.

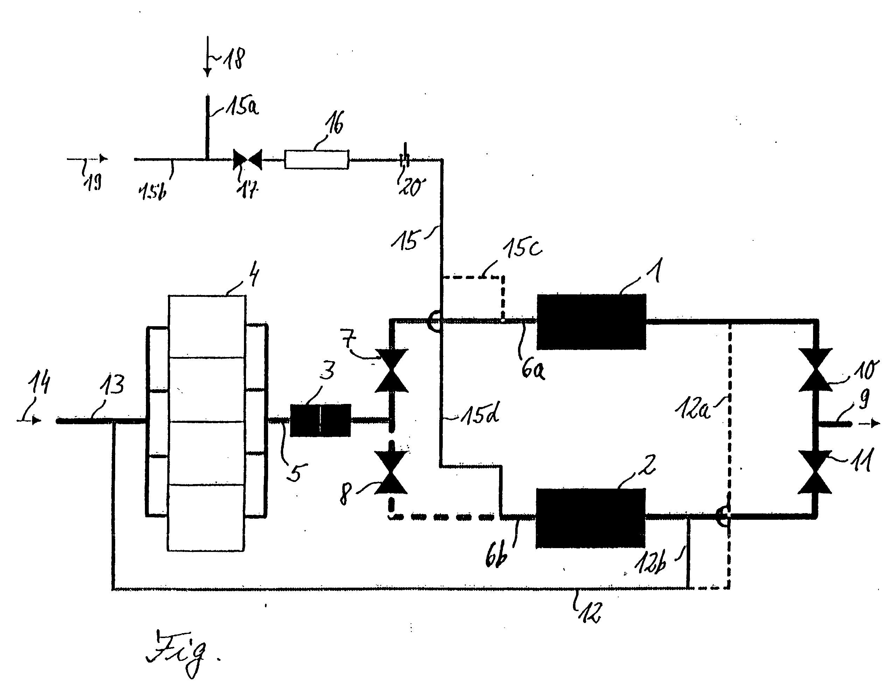

Der jeweils an dieser Weiterleitung in den abführenden Abgasstrang 9 gehinderte Abgasstrom gelangt über einen jeweiligen Rückführ-Leitungszweig 12a, 12b, der vom Bereich des betreffenden Abgasteilstrangs 6a, 6b zwischen Adsorber 1, 2 und Steuerventil 10, 11 abzweigt, in eine gemeinsame Abgasrückführleitung 12, zu der sich die beiden Rückführ-Leitungszweige 12a, 12b vereinigen. In der in Fig. 1 gezeigten Situation ist das Steuerventil 11 geschlossen, so daß das aus dem Adsorber 2 austretende Abgas über den zugehörigen Rückführ-Leitungszweig 12b in die Rückführleitung 12 eingespeist wird, während das andere austrittsseitige Steuerventil 10 geöffnet ist und dem aus dem anderen Adsorber 1 austretenden Abgas die Weiterleitung in den abführenden Abgasstrang 9 ermöglicht, so daß der betreffende Rückführ-Leitungszweig 12a keinen merklichen Abgasstrom führt, was durch den gestrichelten Verlauf desselben symbolisiert ist. Das in die Rückführleitung 12 eingespeiste Abgas wird über diese in eine Ansaugleitung 13 eingespeist und dadurch dem vom Motor 4 angesaugten Luftstrom 14 zugemischt.

Charakteristischerweise beinhaltet die gezeigte Anlage darüber hinaus eine Desorptionsgasleitung 15, in der ein elektrisch beheizbarer Katalysator 16 mit vergleichsweise geringem Katalysatorvolumen, d.h. ein sogenannter Mini-E-Katalysator, angeordnet ist. Stromaufwärts des Mini-E-Katalysators 16 befindet sich ein Steuerventil 17, über das dem Mini-E-Katalysator 16 gesteuert ein brennbares Gemisch zugeführt werden kann, wozu einerseits Kraftstoff 18 und andererseits Frischluft 19 oder alternativ Motorabgas oder ein Frischluft/Motorabgas-Gemisch über zwei sich vereinigende Einlaßleitungszweige 15a, 15b in die Desorptionsgasleitung 15 eingespeist werden können. Über eine stromabwärts des Mini-E-Katalysators 16 in die Desorptionsgasleitung 15 eingebrachte Lambda-Sonde 20 kann das Luft/Kraftstoff- bzw. das Abgasverhältnis geregelt werden. Stromabwärts der Lambda-Sonde 20 verzweigt sich die Desorptionsgasleitung 15 in zwei Desorptionsleitungszweige 15c, 15d, von denen je einer in einen der beiden parallelen Abgasteilstränge 6a, 6b zwischen dessen eintrittsseitigem Steuerventil 7, 8 und dem betreffenden Adsorber 1, 2 mündet.

Im Mini-E-Katalysator 16 wird durch eine Verbrennung des zugeführten Gemischs ein desorbierender Gasstrom erzeugt, der über den entsprechenden Desorptionsleitungszweig 15c, 15d jeweils demjenigen Adsorber zugeführt wird, der sich gerade im Desorptionsbetrieb befindet und daher nicht vom Motorabgasstrom beaufschlagt wird. Dem anderen Adsorber, im gezeigten Zustand der Figur dem Adsorber 1, wird hingegen über das zugehörige, geöffnete eingangsseitige Steuerventil 7 der Motorabgasstrom zugeführt, was andererseits dazu führt, daß kein merklicher Anteil des desorbierenden Gasstroms über den betreffenden Desorptionsleitungszweig in diesen Adsorber gelangt. In Fig. 1 ist dies dadurch symbolisiert, daß der momentan keinen wesentlichen desorbierenden Gasstrom führende Desorptionsleitungszweig 15c gestrichelt wiedergegeben ist.

Die oben in ihrem Aufbau erläuterte, in der Figur gezeigte Abgasreinigungsanlage arbeitet wie folgt. Das vom Motor 4 emittierte Abgas gelangt in den abführenden, sammelnden Abgasleitungsabschnitt 5 und dabei in den motornah positionierten Oxidationskatalysator 3. Dieser oxidiert das Stickstoffmonoxid, das Kohlenmonoxid und die Kohlenwasserstoffe, die im Abgas enthalten sind. Durch die motornahe Positionierung des Oxidationskatalysators 3 setzt eine wirksame Oxidationsreaktion bereits sehr frühzeitig nach einem jeweiligen Start des Motors 4 ein. Die Oxidation von CO und unverbrannten Kohlenwasserstoffen bewirkt eine verbesserte Stickoxidadsorption dadurch, daß die von diesen Bestandteilen verursachte konkurrierende Adsorption nicht in merklichem Maß auftritt. Die Oxidation von NO zu NO₂ hat den Vorteil, daß sich letzteres von den meisten, herkömmlicherweise in Stickoxidadsorbern verwendeten Adsorbermaterialien leichter adsorbieren läßt als NO, so daß diese Maßnahme die Entfernung von Stickoxiden aus dem Abgas begünstigt. Vom Oxidationskatalysator 3 wird dann das solchermaßen vorbehandelte Motorabgas alternierend durch entsprechende Ansteuerung der Ventile 7, 8 einem der beiden Adsorber 1, 2 zugeführt. Dieser ist dadurch als derjenige definiert, der momentan im Adsorptionsbetrieb arbeitet. Das durch diesen von Stickoxiden gereinigte Motorabgas verläßt den betreffenden Adsorber und gelangt über das zugehörige austrittseitige, geöffnete Steuerventil 10 bzw. 11 in den abführenden Abgasstrang 9 und von dort nach außen oder bei Bedarf in eine anschließende, weitere Abgasreinigungsstufe.

Der jeweils gerade nicht mit dem Motorabgas beaufschlagte, andere Stickoxidadsorber wird währenddessen bei Bedarf einem Desorptionsvorgang unterzogen. Dazu wird ihm über die Desorptionsgasleitung 15 der erzeugte desorbierende Gasstrom zugeführt, während er gegenüber einer Einspeisung von Motorabgas durch entsprechende Ansteuerung seines vorgeschalteten Steuerventils abgesperrt bleibt. Aufgrund der desorbierenden Eigenschaften des Gasstroms, insbesondere wegen dessen Verbrennungswärme und den in ihm enthaltenen Bestandteilen, wie unverbrannten Kohlenwasserstoffen, lassen sich die im betreffenden Adsorber adsorbierten Stickoxide rasch und zuverlässig freisetzen. Der aus dem im Desorptionsbetrieb gefahrenen Adsorber austretende Abgasstrom, der die freigesetzten Stickoxide enthält, wird über den betreffenden Rückführ-Leitungszweig in die Rückführleitung 12 weitergeleitet, wozu das zugehörige, austrittseitige Steuerventil vor dem abführenden Abgasstrang 9 geschlossen gehalten wird. Über die Rückführleitung 12 gelangt dieser Abgasstrom und damit die in ihm enthaltenen Stickoxide in die Ansaugleitung 13, von wo die Stickoxide dem Verbrennungsprozeß im Motor 4 zugeführt und dort zu Stickstoff und Sauerstoff verbrannt werden.

Zur Erzeugung des desorbierenden Gasstroms wird der Mini-E-Katalysator 16 zu Beginn einer jeweiligen Stickoxid-Desorptionsphase ausreichend beheizt. Über das eintrittsseitige Ventil 17 wird ihm dann ein kleiner Luft- oder Abgasstrom 19 zusammen mit einer geeigneten Menge Kraftstoff 18, der an Bord ohnehin für den Verbrennungsmotor 4 zur Verfügung steht, zwecks Verbrennung des so erhaltenen Gemischs zugeführt. Dabei wird der Kraftstoff 18 in einem stöchiometrischen oder überstöchiometrischen Anteil, d.h. mit einem Lambdawert von höchstens gleich eins, zugeführt. Zur Bereitstellung des kleinen Luft- oder Abgasstroms 19 bei Betrieb des Mini-E-Katalysators 16 eignet sich beispielsweise der Einsatz einer Sekundärluftpumpe. Der Vorteil bei Verwendung eines Abgas- anstelle eines Frischluftstroms liegt darin, daß der Sauerstoffgehalt im Abgas bereits stark vermindert ist und demzufolge weniger Kraftstoff zudosiert werden muß, um den gewünschten, mindestens stöchiometrischen Kraftstoffanteil zu erreichen. Außerdem besitzt das Abgas eine höhere Temperatur als zugeführte Luft, so daß weniger Energie zum Aufheizen des Mini-E-Katalysator 16 erforderlich ist, was die Gesamtenergiebilanz der Anlage verbessert. Im beheizten Mini-E-Katalysator 16 erfolgt die Verbrennung dieses stöchiometrischen oder fetten Gemischs unter Bildung von CO, H₂ und unverbrannten Kohlenwasserstoffen. Der in der zugeführten Luft bzw. dem zugeführten Abgas enthaltene Sauerstoff wird dabei nahezu vollständig verbrannt. Über die Lambda-Sonde 20 wird das gewünschte Luft/Kraftstoff- bzw. Abgasverhältnis eingeregelt.

Durch den so erzeugten desorbierenden Gasstrom läßt sich für den jeweils zu desorbierenden Stickoxidadsorber ein Wechsel der Abgasatmosphäre auf einen Lambda-Wert von höchstens gleich 1, wie sie zur Stickoxiddesorption günstig ist, gegenüber der Motorabgasatmosphäre bewirken, die aus Kraftstoffverbrauchsgründen vorzugsweise bei Lambda-Werten größer 1 liegt. Da der desorbierende Gasstrom vom Mini-E-Katalysator 16 bereitgestellt und der Verbrennungsmotor 4 folglich hierfür nicht benötigt wird, läßt sich der Verbrennungsmotorbetrieb von den Desorptionsphasen der Stickoxidadsorber 1, 2 entkoppeln, d.h. der Verbrennungsmotor 4 kann mit einem jeweils gewünschten Lambda-Wert gefahren werden, ohne daß sich diesbezüglich Beschränkungen wegen erforderlich werdender Desorptionsvorgänge für die Stickoxidadsorber 1, 2 ergeben. Insbesondere läßt sich der Verbrennungsmotor 4 bei Bedarf ständig im Magerbetrieb fahren.

Es versteht sich, daß neben der gezeigten weitere erfindungsgemäße Anlagen mit modifiziertem Aufbau für den Fachmann realisierbar sind. So kann gegebenenfalls anstelle des elektrisch beheizbaren ein auf andere Weise extern beheizbarer Mini-Katalysator in der Desorptionsgasleitung vorgesehen sein. Des weiteren können anstelle der beiden gezeigten Adsorber mehr als zwei parallele Adsorber vorgesehen sein, wobei jeder Adsorber steuerbar mit dem in der Desorptionsgasleitung bereitgestellten, desorbierenden Gasstrom zwecks Desorption beaufschlagt werden kann.

## Patentansprüche

1. Abgasreinigungsanlage für eine Brennkraftmaschine, mit
- wenigstens zwei parallel angeordneten Stickoxidadsorbern (1, 2) zur abwechselnden periodischen Adsorption und Desorption von im Abgas der Brennkraftmaschine (4) enthaltenen Stickoxiden und
- Mitteln zur Bereitstellung eines Desorptionsgasstroms für den jeweils im Desorptionsbetrieb befindlichen Stickoxidadsorber,
**dadurch gekennzeichnet, daß**
- die Desorptionsgasstrom-Bereitstellungsmittel eine den Stickoxidadsorbern (1, 2) gemeinsame Desorptionsgasleitung (15) mit einem extern beheizbaren Katalysator (16), eine zwischen dem extern beheizbaren Katalysator und den Stickoxidadsorbern angeordnete Lambda-Sonde (20) und Mittel zur Zuführung eines Gemischs aus Luft und/oder Abgas (19) einerseits sowie Kraftstoff (18) in einem mindestens stöchiometrischen, regelbaren Anteil andererseits zum extern beheizbaren Katalysator aufweisen, wobei der extern beheizbare Katalysator das zugeführte Gemisch zu einem desorbierenden Gasstrom verbrennt, welcher dem jeweils im Desorptionsbetrieb befindlichen Stickoxidadsorber (1, 2) über einen zugehörigen Desorptionsleitungszweig (15c, 15d) zugeführt wird und wobei über die Lambda-Sonde (20) ein vorgebbarer Lambdawert des desorbierenden Gasstroms eingeregelt wird.

2. Abgasreinigungsanlage nach Anspruch 1, weiter
**dadurch gekennzeichnet, daß**
der extern beheizbare Katalysator ein elektrisch beheizbarer Mini-Katalysator (16) ist.

## Claims

1. An exhaust emission control system for an internal combustion engine with
- at least two parallel positioned nitrous oxide adsorbents (1, 2) for the alternate, periodic adsorption and desorption of nitrous oxides contained in the exhaust emissions of the internal combustion engine (4) and
- means to provide a desorption gas flow for the nitrous oxide adsorbent present during desorption mode,
**characterised in that**
- the desorption gas flow providing means have a desorption gas line (15) common to the nitrous oxide adsorbents (1, 2) with an externally heatable catalytic converter (16), a lambda probe (20) located between the externally heatable catalytic converter and the nitrous oxide adsorbents and means of feeding a mixture of air and/or exhaust emissions (19) on one hand and at least a stochiometric, adjustable proportion of fuel (18) on the other to the externally heatable catalytic converter, with the externally heatable catalytic converter burning the mixture fed into it into a desorbing gas flow which is fed to the nitrous oxide adsorbent (1, 2) present during desorption mode via a branch of the desorption line (15c, 15d) intended for this purpose and a pre-determinable lambda value for the desorbing gas flow being set by means of the lambda probe (20).

2. An exhaust emission control system in accordance with Claim 1 further characterised in that the externally heatable catalytic converter is an electrically heatable mini catalytic converter (16).

## Revendications

1. Installation d'épuration des gaz d'échappement pour un moteur à combustion interne, comportant :
- au moins deux adsorbeurs d'oxyde d'azote (1, 2) disposés en parallèle, pour alternativement effectuer une adsorption et une désorption périodiques des oxydes d'azote contenus dans les gaz d'échappement du moteur à combustion interne (4), et
- des moyens pour fournir un flux de gaz de désorption pour l'adsorbeur d'oxyde d'azote se trouvant chaque fois en fonctionnent en désorption,
caractérisée en ce que
- les moyens de fourniture de flux de gaz de désorption présentent une conduite de gaz de désorption (15) commune aux adsorbeurs d'oxyde d'azote (1, 2), avec un catalyseur (16) susceptible d'être chauffé de manière externe, une sonde lambda (20), disposée entre le catalyseur susceptible d'être chauffé de façon externe et les adsorbeurs d'oxyde d'azote, et des moyens pour amener un mélange constitué d'air et/ou de gaz d'échappement (19), d'une part, ainsi que de carburant (18) en une proportion susceptible d'être réglée, au moins stoechiométrique, d'autre part, par rapport au catalyseur susceptible d'être chauffé de façon externe, le catalyseur susceptible d'être chauffé de façon externe brûlant le mélange amené pour produire un flux gazeux à effet désorbant, qui est amené à l'absorbeur d'oxyde d'azote (1, 2) se trouvant chaque fois en fonctionnement en désorption, par une ramification de conduite de désorption (15c, 15d) afférente et une valeur lambda, susceptible d'être prédéterminée, du flux gazeux désorbant étant réglée par l'intermédiaire de la sonde lambda (20).

2. Installation d'épuration des gaz d'échappement selon la revendication 1, caractérisée en outre en ce que le catalyseur susceptible d'être chauffé en externe est un mini-catalyseur (16) susceptible d'être chauffé par voie électrique.
